# EUROPEAN PATENT SPECIFICATION

(11) **EP 0 608 030 B1**
(45) Date of publication and mention of the grant of the patent: **03.12.1997**
(21) Application number: 94200114.0
(22) Date of filing: 18.01.1994
(51) Int. Cl.: F24D 3/08, F24H 8/00, F24H 1/38

(54) **Three-way combi-boiler**
Dreiweg Kombi-Kessel
Chaudière combinée à trois voies

(30) Priority: 19.01.1993 NL 9300100
(43) Date of publication of application: 27.07.1994
(73) Proprietor: N.V. RADSON-ALUTHERM, 3530 Houthalen-Helchteren (BE)
(72) Inventor: Marijnen, Jacob Joseph, B-3920 Lommel (BE)
(74) Representative: Smulders, Theodorus A.H.J., Ir.

(56) References cited:
- EP-A- 0 287 142
- DE-A- 3 508 272
- DE-A- 4 105 063
- FR-A- 2 569 469

## Description

The invention relates to an apparatus according to the preamble of claim 1. An apparatus of this kind is disclosed in FR-A-2.569.469. In order to lower down the temperature of the water returning from the space heating circuit or the second heat exchanger to the boiler, a third heat exchanger is provided for preheating sanitary water which is led to the second heat exchanger. The presence of this third heat exchanger makes a third connection opening in the boiler channel necessary. However, the complete boiler volume of the first heat exchange element is used to heat the water of the space heating circuit and/or to heat the sanitary water. The water returning from the second heat exchange element and the water returning from the space heating circuit are being supplied together to the first heat exchange element by means of one and/or two return lines.

In both types of boilers, if it is desired that water can be tapped at least after a short period (convenience time), at least the water supply in the vessel should be maintained at a high temperature. This means that even in periods when the central heating for space heating purposes is switched off (for instance in summer), a large amount of water, corresponding to at least the contents of the first heat exchange element, the central heating side of the second heat exchange element and the supply and discharge lines thereof, should be maintained at a high temperature or each time be brought to that temperature again.

The object of the invention is to provide a combi-boiler of the subject type, in which this drawback has been considerably reduced.

To that end, the apparatus of the type described in the preamble is characterized in the features according to the characterizing part of claim 1.

The water returned from the second heat exchange element to the first heat exchange element will be warmer than the water coming from the space heating circuit, especially when in the first heat exchange element no water needs to be heated for use in the space heating circuit, such as for instance in warm periods. Therefore, it is favorable if the water returned from the second heat exchange element to the first heat exchange element can be supplied to the first heat exchange element at a location such that it is cooled as little as possible by the water coming from the space heating circuit.

To that end, in a preferred embodiment, the first heat exchange element comprises a water passage extending between a first and a second connecting opening, whilst a third connecting opening is provided between the first and the second connecting opening, a supply line of the second heat exchange element is connected to the second connecting opening, and a return line of the second heat exchange element is connected to the third connecting opening.

In this connection, it is particularly favorable when the third connecting opening is provided such that the temperature of the water supplied to the water passage through the third connecting opening and originating from the second heat exchange element substantially corresponds to the temperature of the water located at the third connecting opening in the water passage.

According to a further preferred embodiment of the apparatus, the portion of the water passage extending between the third and the second connecting opening, together with the second heat exchange element and the supply line and the return line thereof, form a sanitary water heating circuit, substantially closed by itself, the pump being a circulation pump included in the sanitary water heating circuit, a control device being provided adapted to maintain a constant temperature in the sanitary water heating circuit, the space heating circuit being connected between the first and the second connecting opening and a second pump being included in the space heating circuit.

Via temperature sensors included in each of the heating circuits, the valve assembly and the burner can be controlled, depending on the heat requirement for the space heating and the sanitary water supply.

The amount of water to be heated for the sanitary water supply can be further limited by designing the second, sanitary water heat exchanger as a plate heat exchanger, as this allows heat of the central heating water to be transferred to sanitary water over a large heating surface. This means that the buffer supply of warm water, which, in the known combi-boilers of the subject type, is necessary for a short convenience time, can be dispensed with and the water passage in the central heating heat exchange element will function as buffer holder.

The combination of a known condensing central heating boiler with any one of the above-described boiler types yields the drawback that the high efficiency of such a central heating boiler is largely or even completely lost as the flue gases to be used for heating the water in the central heating boiler are no longer cooled sufficiently, the water supplied to the central heating boiler being too warm for this, and, consequently, the flue gases can no longer condense.

In an apparatus according to the invention, this drawback is avoided. According to the invention, the first heat exchange element may be a heat exchange element of a condensing boiler, preferably a heat exchange element cast from light metal, absorbing heat in a downward flow of flue gas and giving off the heat to water, passed in countercurrent, with a central heating return line of the space heating circuit connecting to the first connecting opening located at the lower end of the heat exchange element.

Hence, the section of the water passage which is always to be maintained at a relatively high temperature is located in the upper section of the heat exchange element which is also the first section to come into contact with the descending hot flue gases and hence warms up rapidly. The lower section of the heat exchange element, where the water temperature is already relatively low, remains outside of the sanitary water heating circuit and therefore remains at the low temperature, allowing the flue gases to give off their residual heat at that location.

In further explanation of the invention, an exemplary embodiment of the invention will be described with reference to the accompanying drawings.

In these drawings:
Fig. 1 shows a schematic representation of the apparatus;
Fig. 2 shows the apparatus according to Fig. 1, where the water of the space heating circuit is being pumped round in the space heating circuit;
Fig. 3 shows the apparatus according to Fig. 1, where the space heating circuit is fed with heated boiler water;
Fig. 4 is a side view, partly in section, of a central heating boiler for use in an apparatus according to the invention; and
Fig. 5 is a longitudinal section of the central heating boiler taken on the line V-V in Fig. 4.

According to the drawing, the first heat exchange element used in the apparatus, preferably cast in one piece from light metal such as aluminum or an aluminum alloy, has a body 1 with a first connecting opening 2 and a second connecting opening 3 in one of the end walls. In the opposite end wall, closable stubs 4 may have been formed, for removing the casting core.

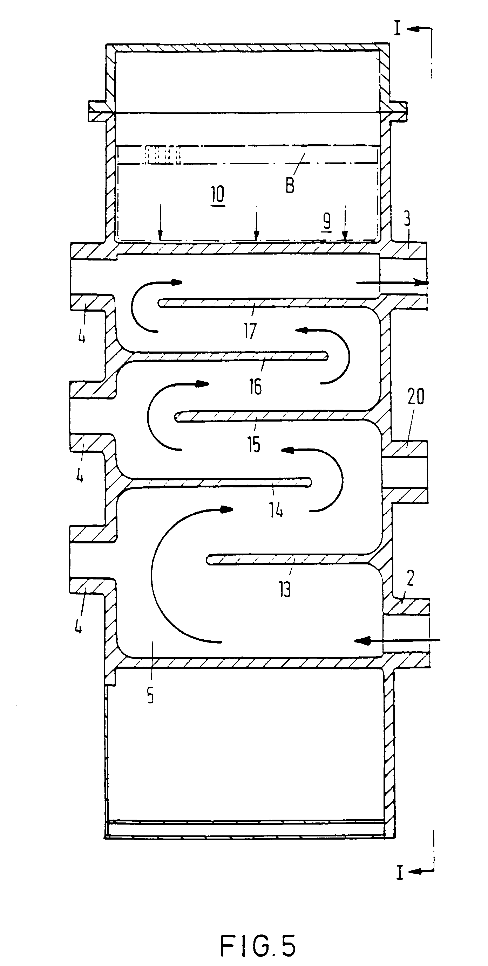

Extending between the first connecting opening 2 and the second connecting opening 3 is a serpentine-shaped water passage 5, whose through-flow section may decrease stepwise, as appears from Fig. 5.

The sides of the body 1 may be provided with surface-increasing protrusions 6, against the tops of which lies the inner wall 7 of a substantially U-shaped gas/air channel 8. With the side walls of the body 1, the wall 7 encloses flue gas passages 9.

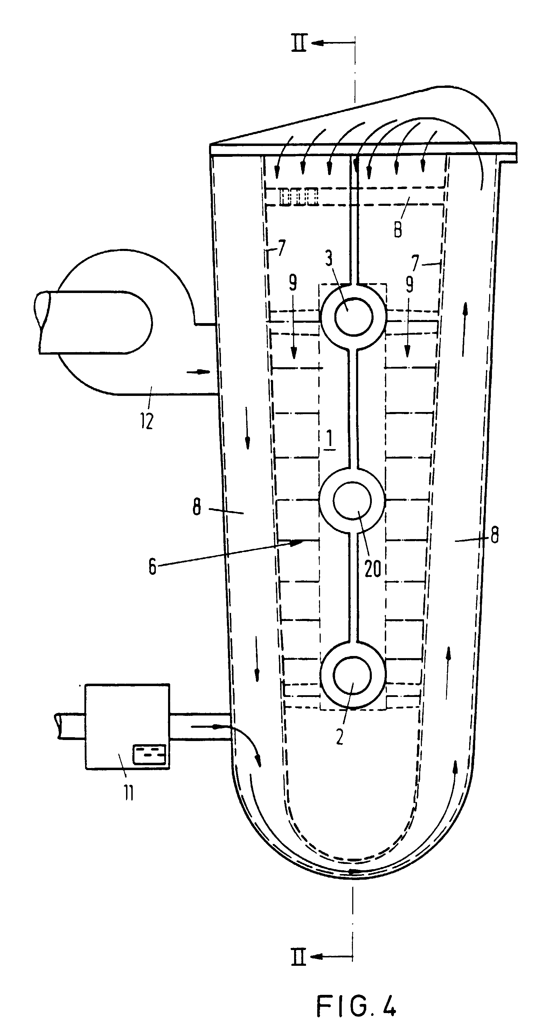

Located above the body 1 is a chamber 10 wherein a perforate burner plate B is provided. In Fig. 4, a gas supply 11 and a fan 12 are indicated for forcibly supplying a combustible gas/air mixture to the upper end of the burner chamber 10 via the U-shaped channel 8.

In operation, flue gases of a very high temperature, ca. 1,200°C, are generated in the burner chamber 10, which are forcibly moved downwards through the flue gas passages 9 and, cooled down to 70-80°C or below, discharged via the lower end of the boiler element. Via the body 1, the absorbed heat is transferred to the water flowing in the water passage 5.

Due to the design of the boiler element, the cold water in the lower, low-temperature area of the boiler element flows much more slowly than in the upper, high-temperature region. Thus, the flue gases are enabled to release their heat optimally. A boiler element of the above-described type is broadly disclosed in, for instance, European patent 0 287 142.

In order for a boiler of this type to operate with optimal (high) efficiency, it is important that the temperature of the water supplied through the first connecting opening 2 is so low that the flue gases blown downwards through the flue gas channels 9 will in fact have cooled down to a temperature of 70-80°C or below at the bottom of the boiler element. However, when return water from a sanitary water heating apparatus is supplied to the first connecting opening, the temperature of the water at the bottom of the water passage 5 will generally become too high to cause the flue gases to condense.

In accordance with the invention, in comparison with the known, above-described boiler type, in the water passage 5 an additional opening 20 is provided in one of the end faces of the body 1 as a third connecting opening for water whose temperature is higher than the desired temperature at the bottom of the boiler element. As described hereinabove, in most cases this will be the case when water is returned from a sanitary water heating apparatus.

By providing the third connecting opening 20 at a suitable location in the water passage 5, the temperature of the water returned through the third connecting opening 20 will substantially correspond to that of the water at that location in the water passage 5, even in the case where water is returned from the space heating circuit to the water passage 5 through the first connecting opening 2. This will allow the water in the section of the water passage 5 extending between the third connecting opening 20 and the second connecting opening 3 to withdraw exactly so much heat from the flue gases forced along the body 1, that the water discharged through the second connecting opening 3 reaches the pre-set temperature desired at that location.

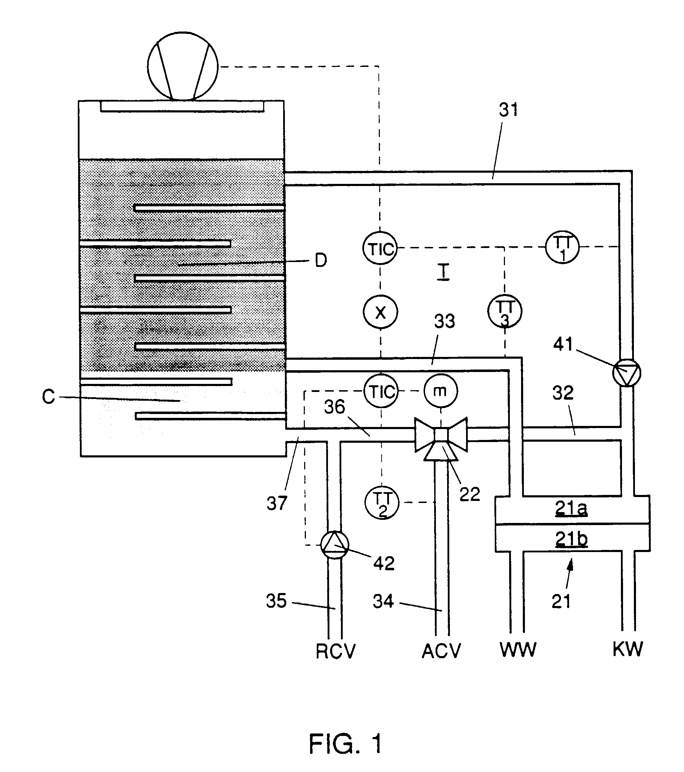

In Fig. 1 two sections are indicated through hatching, viz. section C wherein the water passage 5 extends between the first connecting opening 2 and the third connecting opening 20, which section is an exclusive central heating section, and the section D wherein the water passage 5 extends between the third connecting opening 20 and the second connecting opening 3, which section, together with a second heat exchange element 21 provided externally in the drawing, basically forms a tap or through-flow boiler.

In a combined space and sanitary water heating apparatus according to the invention, a central heating boiler is used as follows (see Figs 1-3).

Connected to the second connecting opening 3 is an outlet line 31, passing to the first connecting opening of the central heating side 21a of a second heat exchange element 21, in the form of a plate heat exchanger, and, via a side branch 32, to one of the connecting ends of a three-way cock 22. A return line 33 passes from the central heating side of the plate heat exchanger 21 to the third connecting opening 20. Provided in the outlet line 31 is a pump 41, by means of which the water is pumped round in the tap water route T, consisting of the lines 31 and 33, the plate heat exchanger 21 and the boiler section D.

The water in the route T is continuously maintained at a pre-set temperature, for instance at 60°C. At the tap water side 21b of the plate heat exchanger 21, mains water is supplied on one side (KW), which can be tapped directly as warm water on the outlet side (WW) of the tap water side 21b of said plate heat exchanger 21.

By designing the second heat exchange element 21 as a plate exchanger, the amount of water to be heated for sanitary water heating in the first heat exchange element is minimal. Consequently, the convenience time of a thus designed sanitary water heating apparatus is particularly low and the energy required for keeping the water in the sanitary water heating circuit T warm is limited.

Connected to the first connecting opening 2 is a return line 37, which, via a T-piece, is connected on the one hand to the return line 35 (RCV) of a space heating circuit, and on the other hand to one of the connecting ends of the three-way cock 22 via the line 36. To the third connecting end of the three-way cock 22, the supply line 34 (ACV) of the space heating circuit is connected.

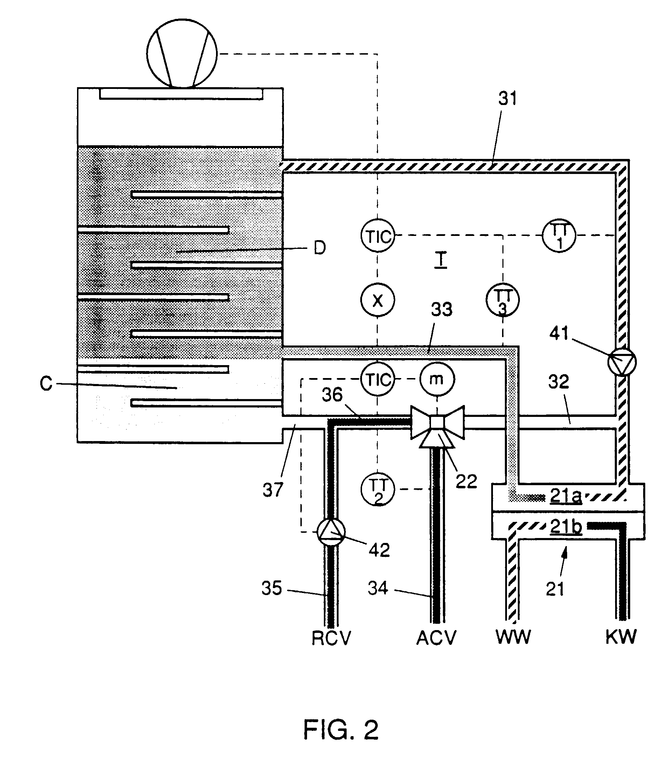

When no hot water is being supplied to the space heating circuit, as shown in Fig. 2, the three-way valve 22 to the line 32 is closed. This allows the central heating water to be pumped round in the installation by means of the pump 42 provided in the return line 35, while the water in the section C of the boiler element will be substantially stationary. Hence, for the sanitary water heating apparatus it is only required that the water volume in the route T be maintained at a temperature. When the water in section C becomes warmer than the water returned through the third connecting opening, it will rise in the boiler element and be supplemented with relatively colder water, so that the condensing capacity of the boiler element is maintained.

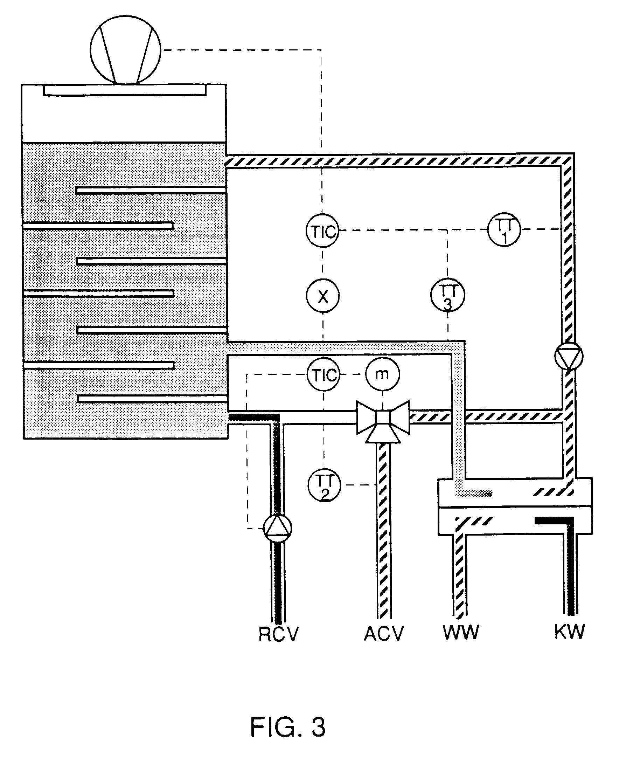

When the space heating circuit is fed with water heated by the boiler element, as shown in Fig. 3, the three-way valve 22 to the line 36 is at least partly closed, so that the portion of the water heated by the central heating boiler and supplied through the line 32 is at least partly directed to the space heating circuit via the supply line 34, after which it is returned via the return lines 35 and 37 to the first connecting opening 2 by means of a pump 42 provided in the line 35. Subsequently, the cooled water in the lower section C of the boiler element is heated again to such extent that, in the water passage 5 at the third connecting opening 20, it has a temperature substantially equal to the temperature of the water flowing into the water passage 5 through the third connecting opening 20.

Hence, the lower section C of the boiler element is only used for heating cooled water returned from the space heating circuit, and not for relatively hot water returned from the sanitary water heating apparatus, which prevents the relatively hot water returned from the sanitary water heating apparatus from giving off heat in the lower section C of the first heat exchange element.

## Claims

1. An apparatus for space heating having a provision for sanitary water heating, said apparatus comprising a first heat exchange element called central heating boiler heat exchange element with a water passage (5) and a space heating circuit, a second heat exchange element called sanitary water heat exchanger (21), and a pump (41), the first heat exchanger comprising a first, second and third connecting opening (2, 3, 20), a return line (37) of the space heating circuit being connected to the first connecting opening (2) and a supply line (31) being connected to the second connecting opening (3) and leading to the second heat exchange element (21) and the space heating circuit, characterized in that the third connecting opening (20) is provided between the first and the second connecting opening (2, 3) whereby a return line (33) of the second heat exchange element is connected to the third connecting opening (20) and a valve (22) is provided for short circuiting a portion of the first heat exchange element, in particular that portion where the temperature is highest, such that the boiler volume to be used for heating central heating water for use in the second heat exchange element is smaller than the boiler volume to be used for heating central heating water for use in the space heating circuit.

2. An apparatus according to claim 1, characterized in that the third connecting opening (20) is provided such that the temperature of the water supplied to the water passage (5) through the third connecting opening (20) and originating from the second heat exchange element (21) substantially corresponds to the temperature of the water located at the third connecting opening (20) in the water passage (5).

3. An apparatus according to claim 1 or 2, characterized in that the portion of the water passage extending between the third and the second connecting opening, together with the second heat exchange element and the supply line and the return line thereof, form a sanitary water heating circuit, substantially closed by itself, the pump (41) being a circulation pump included in the sanitary water heating circuit, a control device being provided adapted to maintain a constant temperature in the sanitary water heating circuit, the space heating circuit being connected between the first and the second connecting opening and a second pump (42) being included in the space heating circuit.

4. An apparatus according to claim 3, characterized in that the valve assembly is formed by a control valve (22), water in the sanitary water heating circuit (T) being capable of circulating while the water located in the section of the water passage (5) extending between the first connecting opening (2) and the third connecting opening (20) is substantially stationary.

5. An apparatus according to claim 4, characterized in that the control valve (22) is a modulating three-way valve.

6. An apparatus according to any one of the preceding claims, characterized in that the second heat exchange element (21) is a plate heat exchange element.

7. An apparatus according to any one of the preceding claims, characterized in that the first heat exchange element is a countercurrent exchange element.

8. An apparatus according to any one of the preceding claims, characterized in that the first heat exchange element is part of a condensing central heating boiler.

9. An apparatus according to claim 7 or 8, characterized in that the first heat exchange element is cast from light metal, absorbing heat in a downward flow of flue gas and giving off the heat to water passed in countercurrent, with a central heating return line of the space heating circuit connecting to the first connecting opening located at the lower end of the heat exchange element.

## Patentansprüche

1. Vorrichtung zur Raumheizung mit einer Vorrichtung für das Erwärmen von Brauchwasser, wobei die Vorrichtung aufweist: ein erstes Wärmetauscherelement (Zentralheizungskessel-Wärmetauscherelement) mit einem Wasserdurchlaß (5) und einem Raumheizungskreislauf, ein zweites Wärmetauscherelement (Brauchwasserwärmetauscher) (21) und eine Pumpe (41), wobei der erste Wärmetauscher eine erste, eine zweite und eine dritte Verbindungsöffnung (2, 3, 20) aufweist, wobei eine Rückführleitung (37) des Raumheizungskreislaufs mit der ersten Verbindungsöffnung (2) verbunden ist, und eine Zufuhrleitung (31) mit der zweiten Verbindungsöffnung (3) verbunden ist und zu dem zweiten Wärmetauscherelement (21) und dem Raumheizungskreislauf führt, dadurch gekennzeichnet, daß die dritte Verbindungsöffnung (20) zwischen der ersten und der zweiten Verbindungsöffnung (2, 3) vorgesehen ist, wodurch eine Rücklaufleitung (33) des zweiten Wärmetauscherelements mit der dritten Verbindungsöffnung (20) verbunden ist, und ein Ventil (22) zum Kurzschließen eines Teils des ersten Wärmetauscherelements (21), insbesondere desjenigen Teils, in dem die Temperatur am höchsten ist, vorgesehen ist, derart, daß das zum Erwärmen von in dem zweiten Wärmetauscherelement zu verwendendem Zentralheizungswasser zu verwendende Volumen kleiner als das zum Erwärmen von in dem Raumheizungskreislauf zu verwendenden Zentralheizungswasser zu verwendende Kesselvolumen ist.

2. Vorrichtung nach Anspruch 1, dadurch gekennzeichnet, daß die dritte Verbindungsöffnung (20) derart vorgesehen ist, daß die Temperatur des dem Wasserdurchlaß (5) durch die dritte Durchlaßöffnung (20) zugeführten und von dem zweiten Wärmetauscherelement (21) kommenden Wassers im wesentlichen der Temperatur des an der dritten Verbindungsöffnung (20) in dem Wasserdurchlaß (5) befindlichen Wassers entspricht.

3. Vorrichtung nach Anspruch 1 oder 2, dadurch gekennzeichnet, daß der Bereich des Wasserdurchlasses, der sich zwischen der dritten und der zweiten Verbindungsöffnung erstreckt, zusammen mit dem zweiten Wärmetauscherelement und der Zufuhrleitung und der Rückführungsleitung einen Brauchwasserheizkreislauf bildet, der im wesentlichen in sich geschlossen ist, wobei die Pumpe eine in dem Brauchwasserheizkreislauf vorhandene Umwälzpumpe ist, eine Regelvorrichtung zum Aufrechterhalten einer konstanten Temperatur in dem Brauchwasserheizkreislauf vorgesehen ist, der Raumheizungskreislauf zwischen der ersten und der zweiten Verbindungsöffnung vorgesehen ist, und wobei eine zweite Pumpe in dem Raumheizungskreislauf enthalten ist.

4. Vorrichtung nach Anspruch 3, dadurch gekennzeichnet, daß die Ventilanordnung durch ein Steuerventil (22) gebildet ist, wobei Wasser im Brauchwasserheizkreislauf (T) zirkulieren kann, während das Wasser, das in dem sich zwischen der ersten Verbindungsöffnung (2) und der dritten Verbindungsöffnung (20) erstreckenden Abschnitt des Wasserdurchlasses (5) befindet, im wesentlichen stationär ist.

5. Vorrichtung nach Anspruch 4, dadurch gekennzeichnet, daß das Steuerventil (22) ein Dreiwege-Steuerventil ist.

6. Vorrichtung nach einem der vorhergehenden Ansprüche, dadurch gekennzeichnet, daß das zweite Wärmetauscherelement (21) ein Platten-Wärmetauscherelement ist.

7. Vorrichtung nach einem der vorhergehenden Ansprüche, dadurch gekennzeichnet. daß das erste Wärmetauscherelement ein Gegenstromtauscherelement ist.

8. Vorrichtung nach einem der vorhergehenden Ansprüche, dadurch gekennzeichnet, daß das erste Wärmetauscherelement Teil eines Kondensations-Zentralheizungskessels ist.

9. Vorrichtung nach Anspruch 7 oder 8, dadurch gekennzeichnet, daß das erste Wärmetauscherelement aus Leichtmetall gegossen ist, Wärme in einem abwärts gerichteten Strom von Verbrennungsgas absorbiert und die Wärme an in Gegenrichtung vorbei strömendes Wasser abgibt, wobei eine Zentralheizungsrücklaufleitung des Raumheizungskreislaufs mit der ersten Verbindungsöffnung verbunden ist, die am unteren Ende des Wärmetauscherelements angeordnet ist.

## Revendications

1. Appareil de chauffage ayant un dispositif de chauffage d'eau sanitaire, l'appareil comprenant un premier élément d'échange de chaleur (élément d'échange de chaleur de chaudière de chauffage central) ayant un passage (5) de circulation d'eau et un circuit de chauffage, un second élément d'échange de chaleur (échangeur de chaleur d'eau sanitaire) (21), et une pompe (41), le premier échangeur de chaleur comprenant une première, une seconde et une troisième ouverture (2, 3, 20) de raccordement, une conduite (37) de retour du circuit de chauffage étant raccordée à la première ouverture (2) de raccordement et une conduite (31) d'alimentation étant raccordée à la seconde ouverture (3) de raccordement et rejoignant le second élément (21) d'échange de chaleur et le circuit de chauffage , caractérisé en ce que la troisième ouverture (20) de raccordement est disposée entre la première et la seconde ouverture (2, 3) de raccordement de manière qu'une conduite (33) de retour du second élément d'échange de chaleur soit raccordée à la troisième ouverture (20) de raccordement, et une soupape (22) est incorporée afin qu'elle mette en court-circuit une partie du premier élément d'échange de chaleur (21), en particulier la partie dans laquelle la température est la plus élevée, si bien que le volume de la chaudière destiné à être utilisé pour le chauffage de l'eau de chauffage central dans le second élément d'échange de chaleur est inférieur au volume de chaudière destiné à être utilisé pour le chauffage de l'eau de chauffage central destinée au circuit de chauffage.

2. Appareil selon la revendication 1, caractérisé en ce que la troisième ouverture (20) de raccordement est disposée de manière que la température de l'eau transmise au passage (5) d'eau par la troisième ouverture (20) de raccordement et provenant du second élément (21) d'échange de chaleur corresponde pratiquement à la température de l'eau dans la troisième ouverture (20) de raccordement dans le passage (5) de circulation d'eau.

3. Appareil selon la revendication 1 ou 2, caractérisé en ce que la partie du passage d'eau disposée entre la troisième et la seconde ouverture de raccordement, avec le second élément d'échange de chaleur, la conduite d'alimentation et la conduite de retour correspondante, forment un circuit de chauffage d'eau sanitaire, pratiquement fermé par lui-même, la pompe étant une pompe de circulation incorporée au circuit de chauffage d'eau sanitaire, un dispositif de commande étant destiné à maintenir une température constante dans le circuit de chauffage d'eau sanitaire, le circuit de chauffage étant raccordé entre la première et la seconde ouverture de raccordement et une seconde pompe étant incorporée au circuit de chauffage.

4. Appareil selon la revendication 3, caractérisé en ce que l'ensemble à soupape est formé par une soupape de commande (22), l'eau du circuit (T) de chauffage d'eau sanitaire pouvant circuler alors que l'eau placée dans le tronçon du passage (5) de circulation d'eau placé entre la première ouverture (2) et la troisième ouverture (20) de raccordement est pratiquement fixe.

5. Appareil selon la revendication 4, caractérisé en ce que la soupape de commande (22) est une soupape à trois voies de modulation.

6. Appareil selon l'une quelconque des revendications précédentes, caractérisé en ce que le second élément (21) d'échange de chaleur est un élément d'échange de chaleur à plaques.

7. Appareil selon l'une quelconque des revendications précédentes, caractérisé en ce que le premier élément d'échange de chaleur est un élément d'échange à contre-courant.

8. Appareil selon l'une quelconque des revendications précédentes, caractérisé en ce que le premier élément d'échange de chaleur fait partie d'une chaudière de chauffage central à condensation.

9. Appareil selon la revendication 7 ou 8, caractérisé en ce que le premier élément d'échange de chaleur est en métal léger moulé, absorbant la chaleur d'un courant descendant de gaz brûlés et transmettant sa chaleur à l'eau qui circule à contre-courant, une conduite de retour de chauffage central du circuit de chauffage se raccordant à la première ouverture de raccordement placée à l'extrémité inférieure de l'élément d'échange de chaleur.
